# EUROPEAN PATENT SPECIFICATION

(11) **EP 3 073 831 B1**
(45) Date of publication and mention of the grant of the patent: **27.04.2022**
(21) Application number: 14803175.0
(22) Date of filing: 28.11.2014
(51) Int. Cl.: A22C 17/00, B26D 1/36, B26D 5/34, B26D 7/06

(54) **A CUTTING APPARATUS AND A METHOD FOR CUTTING FOOD PRODUCTS INTO SMALLER FOOD PRODUCTS**
SCHNEIDVORRICHTUNG UND VERFAHREN ZUM SCHNEIDEN VON LEBENSMITTELN IN KLEINERE NAHRUNGSMITTEL
APPAREIL DE COUPE ET PROCÉDÉ PERMETTANT DE COUPER DES PRODUITS ALIMENTAIRES EN PRODUITS PLUS PETITS

(30) Priority: 29.11.2013 EP 13195056
(43) Date of publication of application: 05.10.2016
(73) Proprietor: Marel A/S, 8200 Aarhus N (DK)
(72) Inventor: SØRENSEN, Gorm, DK-3720 Aakirkeby (DK); MIKKELSEN, Peter, DK-3740 Svaneke (DK)
(74) Representative: Patentgruppen A/S
(86) International application number: PCT/EP2014/075998
(87) International publication number: WO 2015/079039

(56) References cited:
- WO-A1-2004/034794
- WO-A1-2004/106020
- DK-U3- 9 600 164
- US-A- 5 425 307
- US-B1- 6 407 818
- US-B1- 6 655 248

## Description

### FIELD OF THE INVENTION

The present invention relates to a cutting apparatus and a method for cutting food objects into smaller food products.

### BACKGROUND OF THE INVENTION

WO2005097438 discloses a cutting apparatus for cutting food objects such as fish fillet, chicken breasts, deboned chicken legs etc. into portions having fixed shape, typically a rectangular shape. This cutting apparatus is based on utilizing two cutting devices arranged after each other where all the sides of the food objects are cut. The first cutting device acquires scanning data of incoming food products and based thereon cuts the food products into parallel food strips. These food strips are subsequently rotated manually 90° and conveyed through a second cutting device that cuts the food strips into plurality of squares.

This intermediate step of manually realigning the food strips for the subsequent cut requires, in addition to the extra labour needed, that the food products are stiff since otherwise the handling of the food strips would be more difficult. The most logical solution to obtain such stiffness is to freeze the food products, e.g. by placing a freezing tunnel in front of the first cutting device. This is obviously not only a time demanding solution, but is also uneconomical.

One way of overcoming this problem is by using a water-jet cutter, since such a cutting device is capable of cutting the food objects in any size and shape. However, the operational costs of such a cutting device are high because it requires high pressure system and water source. Moreover, such water-jet cutter requires that the food objects are lying on a conveyor belt made of steel/metal, but such belts typically have large turning diameter meaning that it is difficult to separate the individual portions, e.g. the rectangular portions, from each other.

Further, WO 2004/034794 A1 relates to an apparatus for portion cutting of products, wherein cutting means, e.g. a rotating knife, is arranged lateral to conveying means for transporting the products. The conveying means comprises individual conveyor belts arranged end-to-end such that the products pass a slit between the conveyor belt ends, which slit is perpendicular to the conveying direction, and wherein cutting of the products is performed by the cutting means when the products pass the slit.

The inventor of the present invention has appreciated that there is thus a need for an improved cutting apparatus and has in consequence devised the present invention.

### SUMMARY OF THE INVENTION

It is an object of embodiments of the invention to provide fully automatized and simplified cutting apparatus with higher throughput and that is more economical. In general, the invention preferably seeks to mitigate, alleviate or eliminate one or more of the above mentioned disadvantages of the prior art singly or in any combination. In particular, it may be seen as an object of embodiments of the present invention to provide a cutting apparatus that solves the above mentioned problems, or other problems.

To better address one or more of these concerns, in a first aspect of the invention a cutting apparatus according to claim 1 is provided for cutting food objects into smaller food products, comprising:
- an infeed conveyor having a first end and a second end,
- a conveyor system having a first end and a second end, the conveyor system being arranged such that the first end of the conveyor system is adjacent and essentially parallel to the second end of the infeed conveyor defining a first slit there between, and
- a first cutting unit having a cutting plane extending through the first slit and controlled by a control unit for cutting food objects conveyed by the infeed conveyor into smaller food products,
wherein the first slit and the cutting plane of the cutting unit forms an angle to an axis perpendicular to the conveying direction.

The fact that the food objects are cut at an angle in relation to the conveying direction opens a possibility to make one or more subsequent cuts along one and the same conveyor system, whereas in case the food objects are cut perpendicular to the conveying direction the resulting smaller food products must always be removed from the conveyor system in order to make it possible to perform a subsequent cut.

By the term angle is meant an angle that is different from 90° in relation to the conveying direction.

The cutting apparatus further comprises a first scanning device associated with the infeed conveyor for acquiring scanning data of incoming food objects on the infeed conveyor, where the acquired scanning data are used as a control data by the control unit for controlling the first cutting unit. The cutting apparatus may further comprise a tracking device such as a taco meter and the like to track the food objects at all times such that the control unit that controls the first cutting unit is aware of the exact position of the food objects when starting the cutting process.

The conveyor system comprises:
- a conveyor sub-system having a first end and a second end, and
- an outfeed conveyor having a first end and a second end, where the first end of the conveyor system is the first end of the conveyor sub-system, and where the second end of the conveyor sub-system is adjacent and essentially parallel to the first end of the outfeed conveyor and defines a second slit.

The second slit forms an angle in relation to the first slit, and the cutting apparatus further comprises a second cutting unit controlled by a control unit having a cutting plane extending through the second slit.

It is thus possible to cut the incoming food objects into smaller food products, where the smaller food products are cut at all sides, automatically without any manual intervening. It follows thus that stiffness requirement of the incoming food objects, e.g. by freezing the food objects, is no longer required which makes the overall apparatus not only more economical, but also enhances the throughput of the apparatus.

The smaller food products may be, but is not limited to, any types of products that have fixed shapes where e.g. all the sides of the food products have been cut, but such fixed shapes may e.g. any types of forms such as rectangular forms, rhomboid forms, triangular forms etc.

The smaller food products may be considered as portions that e.g. fulfill a pre-defined target, such as, but not limited to, target weight and/or dimension.

The first and/or the second cutting units may be, but are not limited to sword type blade, linear moved blade, laser, water jet, ultrasonic etc.

The angle of the second slit in relation to the first slit is, in one embodiment, in the range between 70° and 110°, preferably between 80° and 100°, more preferably around 90°.

In one embodiment, the control unit is further adapted to generate a distance between the smaller food products by means of controlling the relative speed between the infeed conveyor and the conveyor system. This may e.g. be solved by means of starting and stopping the infeed conveyor subsequent to each cut while the conveyor system is running, or by slowing down the speed of the infeed conveyor subsequent to each cut, where the relative speed difference between the infeed conveyor and the conveyor system, which runs at higher speed, causes a spacing between adjacent smaller food products. Other solutions are inherently possible, such as by having the conveyor system run at higher speed, compared to the infeed conveyor, at all times. Accordingly, as will be discussed in more details later, such spacing between adjacent smaller food objects may be highly preferably for the subsequent cuts of the smaller food objects.

In one embodiment, the food objects are placed onto the infeed conveyor such that at least one side of the food objects is essentially parallel to the first slit. Assuming that the food objects are e.g. chicken breasts or deboned chick legs, the placement onto the infeed conveyor would preferably be such that one side of the chicken breasts or deboned chick legs are substantially parallel to the first slit. Thus, the first cut would result in that the smaller food objects are a plurality of parallel strips of food objects, in this case strips of poultry meat. The placement onto the infeed conveyor may be done manually, or it may be fully automatic via e.g. a robotic arm. The fact that the second cutting unit may be angled in relation to the first cutting unit, e.g. form an 90° angle in relation to the first cutting unit, it is possible to cut the parallel strips into smaller food products having rectangular shape.

Also, the fact that sufficient space is provided between adjacent smaller food objects, it is possible to cut each individual smaller food objects at a time, without cutting adjacent smaller food objects simultaneously. Thus, a very good control of the cutting is provided into the desired shape and/or portion.

In one embodiment, the conveyor sub-system comprises:
- a first conveyor having a first end and a second end, where the first end of the conveyor sub-system is the first end of the first conveyor, and
- a second conveyor having a first end and a second end, the first end of the second conveyor being positioned adjacent and essentially parallel to the second end of the first conveyor defining an intermediate slit where the intermediate slit is essentially parallel to the first slit, and where the second end of the conveyor sub-system is the second end of the second conveyor.

As already addressed, the control unit may in one embodiment be further adapted to generate a distance between the smaller food products at the first slit by means of controlling the relative speed between the infeed conveyor and the conveyor system, in this case to control the speed between the infeed conveyor and the first conveyor, so as the create a distance between adjacent smaller food objects.

In one embodiment, the conveying speed of the second conveyor is larger than the speed of the first conveyor. It is thus possible to enhance the space between adjacent smaller food products, e.g. the above mentioned food strips, before the subsequent cut is performed so as to ensure that adjacent smaller food products are not cut simultaneously.

The fact that the above mentioned intermediate slit is positioned between the first slit and the second slit is parallel to the first slit it is ensured that the additional distance created between the smaller food products at the increased distance transfer caused by the speed difference of the first conveyor and the second conveyor is "uniformly" transferred to the smaller food products. If e.g. the intermediate slit would not be parallel to the first slit, the smaller food products would most likely be shifted on the conveyor or tip over due to the speed difference between the firs and the second conveyors. However, due to this parallel arrangement this speed difference is applied on the smaller food products simultaneously.

In one embodiment, the angle of the second slit is shifted, in relation to the angle of the first slit, between 70° and 110°, preferably around 90°.

In one embodiment, the cutting apparatus further comprises a second scanning device associated with the conveyor sub-system or the first or the second conveyor for acquiring scanning data of the smaller food products, where the acquired scanning data of the smaller food products are used as a control data by the control unit for controlling the second cutting unit. It is thus possible to acquire detailed information about e.g. the position of the smaller food objects on the second conveyor before undergoing the second cut by the second cutting unit and thus the final cut of the food objects into the smaller food objects is fully controlled.

It should be noted that the second cutting unit is operated solely on the scanning data of the first scanning device, e.g. by tracking the position of the smaller food product.

In one embodiment, the cutting apparatus comprises an angle adjustment mechanism for adjusting the angle of the first slit and simultaneously the angle of the cutting plane such that the cutting plane is within the first slit at all times. The angle adjustment mechanism is in one embodiment operated by the control unit based on the acquired scanning data, where the controlling includes successively increasing or decreasing the angle of the first slit and the cutting plane while cutting a food product by the cutting unit such as between 30° and -30° in relation to the conveying direction. In one embodiment, the controlling includes successively increasing or decreasing the angle of the first slit and the cutting plane while cutting a food product by the cutting unit such that the resulting smaller food products fulfill a pre-determined target criterion such as a weight criterion.

An effective solution is thus provided to cut incoming food product into smaller food products, where the pre-determined target criterion may as an example be smaller food products of fixed target weight. The scanning data may e.g. include volumetric data and/or areal related data indicating the area of the incoming food products, which may e.g. be a fish fillet of any type, where this data is utilized as input data by the control unit in controlling the angle adjustment mechanism. As an example, the controlling may include how fast the angle of the angle adjustment mechanism is changed when e.g. adjusting it from 30° and -30° in relation to the conveying direction.

In one embodiment, the first and/or the second cutting unit is mounted to a tilting angle mechanism and where the control unit is further adapted to control the tilting angle of the cutting unit during the cutting. It is thus possible to cut the food objects into smaller food products that have more natural shape, e.g. similar as fish fillets or chicken breasts, where the cut sides are not necessarily vertical but may have varying inclinations,

It should be noted that the cutting plane of the first and or second cutting unit(s) lies extend through the first or the second slits, respectively. However, if needed, the position of the first and/or the second slit(s) may, if needed, may be adapted to the tilted cutting angle so as to avoid that the belt becomes damaged.

The conveyor system, and or the conveyor sub-system and/or the first and the second conveyor may be round belt conveyors comprising plurality of spaced apart round belt, where the round belt may be extending essentially parallel to the conveying direction. Moreover, the number of round belts may be such that the round belts form almost a continuous or semi continuous conveyor belts. The advantage of utilizing such round belt conveyors is that it is relative easy to create such an angles between adjacent conveyor or conveyor systems. Another advantage by using round belts is that it makes it easy to make a concave conveyor surface.

In a second aspect of the invention a method is provided of cutting food objects into smaller food products using a cutting apparatus according to any of claims 1 to 10, which comprises:
- an infeed conveyor having a first end and a second end,
- a conveyor system having a first end and a second end, the conveyor system being arranged such that the first end of the conveyor system is adjacent and essentially parallel to the second end of the infeed conveyor defining a first slit there between, and
- a cutting unit having a cutting plane extending through the first slit and controlled by a control unit,
the method comprising the step of:
- cutting food objects conveyed by the infeed conveyor into smaller food products, wherein the first slit and the cutting plane of the cutting unit forms an angle to an axis perpendicular to the conveying direction.

In one embodiment, the first and/or the second cutting units are positioned above the first and/or the second slits with the knife plane of the first and/or the second cutting units extending through the respective slit.

In one embodiment, the shape of a carrying surface around the first and/or second slits, i.e. the shape of the first and/or second slits, is concave and essentially follows the cutting path of the first and/or the second cutting units when the cutting units are arranged above the first and/or the second slits.

Since the first and/or the second cutting units is/are positioned above the first and/or the second slits and where the shape of the first and/or second slits is/are concave and essentially follow the cutting path of the first and/or the second cutting units it is possible to reduce the size of the cutting units significantly and also the dimension of the cutting apparatus. Moreover, the weight and the inertia of the first and/or second cutting units may be reduced and thus the cutting speed may be increased and therefore the throughput of the cutting apparatus may be increased.

The term concave may be understood as any shape, which does not necessarily have to be smoothly shaped, having a center part that is positioned at a lower position than the sides, e.g. have U-shape, V-shape, arc-shape, and the like.

In one embodiment, the carrying surface comprises two or more side by side arranged endless belts or cords. The cords may have any type of cross-sectional profile, such as a round profile or V-shaped profile.

In one embodiment, the concave shape of the carrying surface around the first and/or the second slits is an arc having a center being substantially at the rotational axis of the cutting unit.

In one embodiment, the first and/or the second cutting unit comprises:
- an arm,
- a knife blade mounted to one end of the arm, the opposite end of the arm being adapted to be mounted to a driving unit for supplying rotational movement of the arm and thus the knife blade,
wherein the knife blade is mounted to the arm such that, while cutting a food object into smaller food objects, a cutting edge side of the knife blade engages with the food object under an angle such that the knife blade exerts with a downwardly facing force onto the food object and towards the carrying surface of the conveyor system during the cutting.

Accordingly, a cutting unit is provided that is significantly lighter and smaller than prior art cutting units and that is suitable to be placed above the cutting apparatus, i.e. above the first and/or the second slits.

In one embodiment, the cutting edge side and the carrying surface or a tangent at the point of contact of the carrying surface around the slit form an acute angle during the cutting. It is thus ensured that a downwardly pointing force is created which prevents the food objects to slide or move during the cutting. In an embodiment, the acute angle is between 10° and 60°, preferably between 20° and 30°, most preferably around 25°.

In one embodiment, the angle is adapted to the type and/or the characteristics of the food object and/or the coefficient of friction of the carrying surface such that during cutting, the horizontal force exerted (Fₕₒᵣᵢ) by the cutting unit onto the food object does not exceed the frictional force between the food object and the carrying surface. It is thus ensured that during the cutting the friction force pointing in the opposite direction to the horizontal force (Fₕₒᵣᵢ) is sufficient to prevent side-wise displacement during the cutting.

In one embodiment, the cutting edge side comprises a smooth cutting edge. In an embodiment, the smooth cutting edge is a substantially straight cutting edge or a curved line.

In one embodiment, the arm is made of a material selected from:
- carbon fibers,
- ceramic material,
- plastic material, or
- metal or metal alloy.

In one embodiment, the length of the arm is adapted to the maximum thickness of the food objects, such that when the arm is mounted to the driving unit, the length of the arm is shorter than the distance from the pivot to the food objects with a clearance distance between the opposite end of the arm and the top of the food objects. The clearance distance may in one embodiment be in the range of 1 to 9 mm, preferably in the range of 3 to 7 mm, most preferably around 5 mm.

In one embodiment, the cutting apparatus further comprises a cutting plane adjustment mcchanism adapted to tilt the angle of the knife plane compared to vertical by means of adjusting the angular position of the cutting unit(s). It is thus possible to increase the variety of the cuts. It may as an example be preferred to cut the food objects in such a way that they have more natural shape, instead of making only verical cuts as an example. The cutting plane adjustment mechanism may as an example comprise a mechanism to which the cutting unit is mounted to that is capable of adjusting the angular position of the knife.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
figures 1 and 2 show a perspective view and a top view of one embodiment of a cutting apparatus according to the present invention for cutting food objects into smaller food products,
figures 3 and 4 show another embodiment of the cutting apparatus according to the present invention,
figures 5 and 6 show a perspective view and a top view of yet another embodiment of the cutting apparatus according to the present invention,
figure 7 shows a side view of figure 5(c) and 6(c),
figure 8 shows a zoomed of view of figure 5(d) and 6(d),
figure 9 shows an example of a fish fillet that has been cut into plurality of smaller food products,
figures 10 to 12 show a perspective view and a side view of one embodiment of a conveyor system that may be used in relation to any of the figures 1-8,
figures 13 and 14 depict a perspective view and a side view of the conveyor system shown in figures 10 and 11, where the cutting unit is mounted to a tilting angle mechanism,
figure 15 shows another embodiment of a cutting apparatus according to the present invention where the cutting unit is arranged above the conveyor or conveyor system and where a slit through which a cutting plane of the cutting unit extends is concave and essentially follows the shape of the cutting path of the cutting unit,
figure 16 depicts graphically an embodiment where the conveyors or carrying surfaces comprise a plurality of side by side arranged endless cord belts,
figure 17 shows an embodiment where the concave shape of the carrying surface around the first (and/or the second) slit(s), i.e. the shape of the slit(s) 1503, is an arc shaped,
Figure 18 depicts graphically the movement of the cutting unit in figure 15 through the concave slit,
figures 19a-c depicts graphically movement of a food product being cut, where all strips from the same food object are cut into final portions at the same time, and
figures 20a-c depicts graphically movement of a food product being cut, where all strips are cut into final portions one by one.

### DESCRIPTION OF EMBODIMENTS

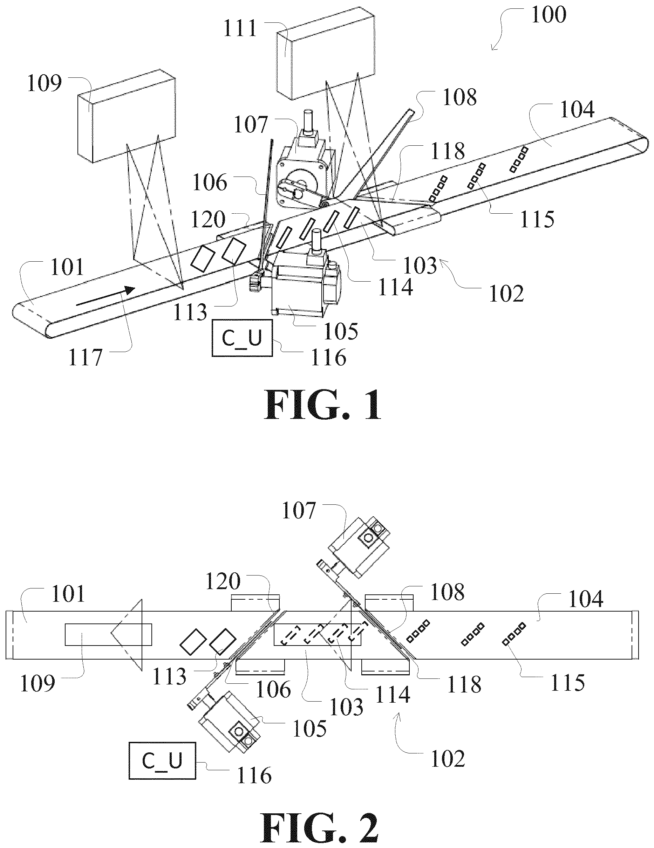

Figures 1 to 8 show one example of how to achieve the angled ends of the conveyors. In these figures the belt is a traditional flat belt that is "folded".

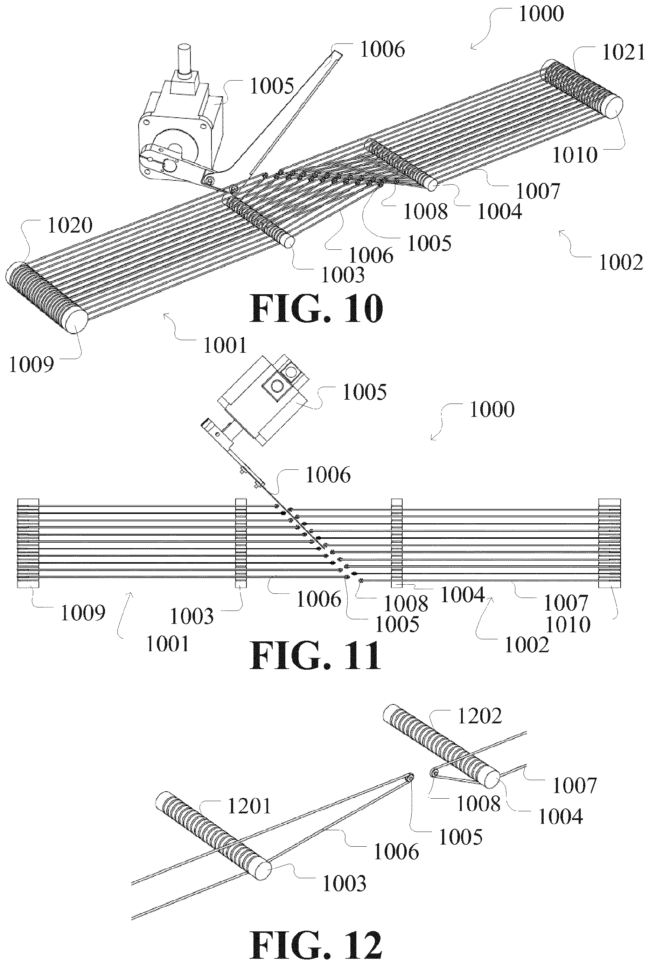

Figures 10 to 14 show another example on how to achieve the angled ends of the conveyors. In these figures the conveyors consist of multiple round belts spaced apart.

It should be noted that the present invention is not be considered to be limited to the above mentioned conveyors.

Figures 1 and 2 show a perspective view and a top view of one embodiment of a cutting apparatus 100 according to the present invention for cutting food objects 113 into smaller food products 114, 115. The cutting apparatus 100 comprises an infeed conveyor 101 having a first end and a second end, a first scanning device 109 associated with the infeed conveyor 101, a conveyor system 102 having a first end and a second end that is arranged such that a first end of the conveyor system 102 is adjacent and essentially parallel to the second end of the infeed conveyor 101 defining a first slit 120 there between. The first slit 120 forms an angle to an axis perpendicular to the conveying direction as indicated by the arrow 117.

The cutting apparatus 100 further comprises a first cutting unit 105 which may comprise a first sword blade 106 having a cutting plane extending through the first slit and controlled by a control unit 116 for cutting the food objects 113 conveyed by the infeed conveyor 101 into smaller food products 114.

As shown here, the convcyor system 102 comprises a convcyor sub-system 103, which in this embodiment is a single conveyor, having a first end and a second end, and an outfeed conveyor 104 having a first end and a second end. The first end of the conveyor sub-system 103 is the above mentioned end that is adjacent and essentially parallel to the second end of the infeed conveyor. The second end of the sub-conveyor system 103 is adjacent and essentially parallel to the first end of the outfeed conveyor and defines a second slit 118 that forms an angle in relation to the first slit 120.

The cutting apparatus 100 further comprises a second scanning device 111 associated with the sub-conveyor system 103, and a second cutting unit 107 controlled by a control unit, which may be the above mentioned control unit 116, comprising a second sword blade 108 having a cutting plane extending through the second slit 118. The angle of the second slit 118 in relation to the first slit 120 may be in the range between 70° and 110°, preferably between 80° and 100°, more preferably around 90°.

The functioning of the cutting apparatus 100 may in one embodiment be described in the following way: food objects 113 are placed onto the infeed conveyor 101, this may be done manually or be fully automatically using e.g. a robotic arm (not shown). Also, as depicted in here it may be preferred to place the food objects 113 under an angle such that one side of the food objects is substantially parallel to the first slit 120. The food objects 113 are conveyed by the infeed conveyor 101, where the scanning device acquires scanning data of the food objects 113, where the acquired scanning data are used as a control data by the control unit 116 for controlling the first cutting unit 105. The scanning data may as an example indicate the exact positioning of the food objects on the infeed conveyor 101, other data may just as well be acquired such as the thickness profile, the colour of the food objects etc.

The cutting apparatus 100 may further comprise a tracking device (not shown) such as a taco meter and the like to track the food objects at all times such that the control unit that controls the first cutting unit 105 is aware of the exact position of the food objects when starting the cutting process.

As shown here, the smaller food products 114 are in a form of parallel food strips 114, where there is a distance between adjacent food strips 114 so as to ensure that only one food strip will be cut at a time by the second cutting unit 107. One way of generating such a distance is by operating the relative speed between the infeed conveyor 101 and the conveyor sub-system 103 by the control unit 116. This may in one embodiment be done by means of stopping/starting the infeed conveyor 101 after each cut for a short time period (e.g. a fraction of a second) while the conveyor sub-system 103 is running, or by slowing the speed of the infeed conveyor 101 down for a short time period subsequent to each cut (e.g. a fraction of a second). Other options may be possible, such as by means of increasing the speed of the conveyor sub-system 103 subsequent to each cut, where the speed of the conveyor sub-system 103 is larger than that of the infeed conveyor 101.

The second scanning device 111 associated with conveyor sub-system 103 acquires scanning data of the parallel food strips 114 so as to determine the exact position of the food strips 114 on the conveyor sub-system 103, where based on this acquired scanning data the second cutting unit 107 cuts each respective food strip into smaller food products 115 having rectangular shape. The above mentioned tracking feature is preferably also provided so as to keep track of the position of the parallel strips 114 at all times.

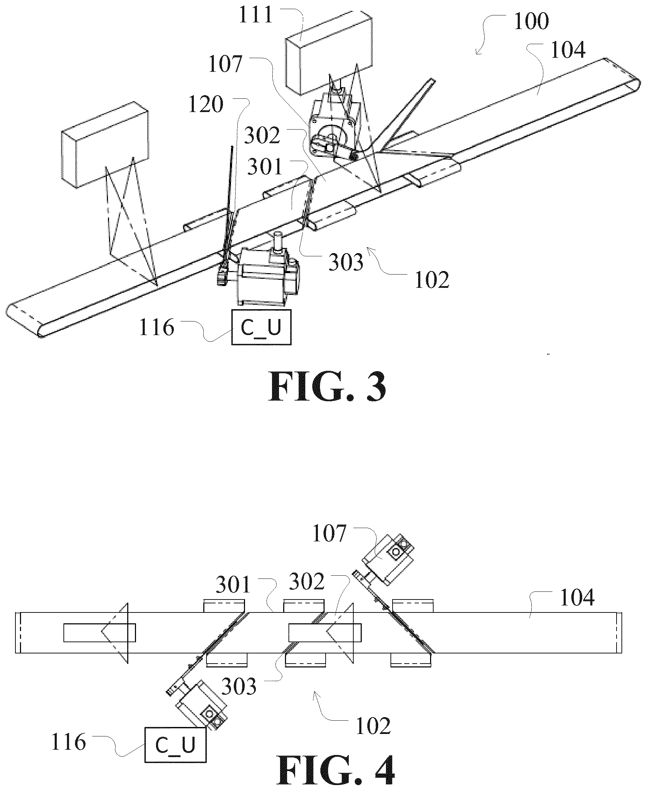

Figures 3 and 4 show a perspective view and a top view of the embodiment of the cutting apparatus 100 shown in figures 1 and 2, where in this embodiment the conveyor sub-system 103 comprises a first conveyor 301 having a first end and a second end, and a second conveyor 302 having a first end and a second end, where the first end of the second conveyor 302 is positioned adjacent and essentially parallel to the second end of the first conveyor 301 defining an intermediate slit 303, which as shown here is essentially parallel to the first slit 120.

The conveying speed of the second conveyor 302 may be larger than the speed of the first conveyor 301 so as to enhance the spacing between adjacent food strips (not shown here) further before arriving at the second cutting unit 107 to ensure that one food strip (smaller food product) is being cut at a time.

The fact that the above mentioned intermediate slit 303 is positioned between the first slit 120 and the second slit is parallel to the first slit 120 it is ensured that the additional distance created between the smaller food products at the increased distance transfer caused by the speed difference of the first conveyor 301 and the second conveyor 302 is "uniformly" transferred to the smaller food products. If e.g. the intermediate slit 303 would not be parallel to the first slit 120, the smaller food products would most likely be shifted on the conveyor or tip over due to the speed difference between the first conveyor 301 and the second conveyor 302. However, due to this parallel arrangement this speed difference is applied on the smaller food products simultaneously.

The second scanning device 111 is preferably associated to the second conveyor 302 to, as already addressed in relation to figures 1 and 2, to provide scanning related data used by the control unit 116 to control the second cutting unit 107.

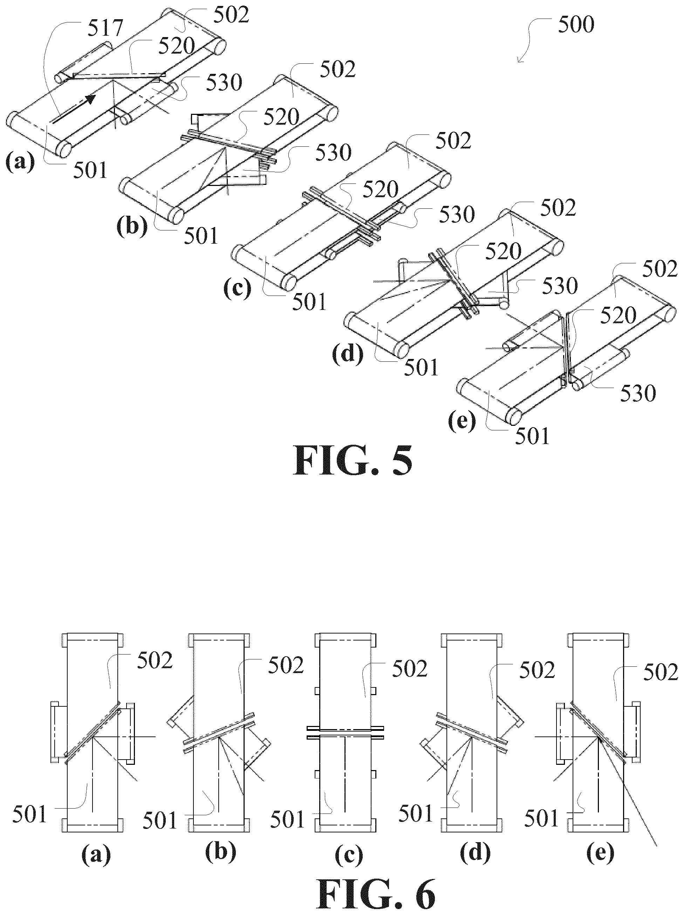

Figures 5 and 6 depict a perspective view and a top view of yet another embodiment of the cutting apparatus 500 according to the present invention, where the cutting apparatus comprises an infeed conveyor 501 and a conveyor system 502, where the conveyor system in this embodiment may be a single conveyor or an outfeed conveyor.

The cutting apparatus further comprises an angle adjustment mechanism 530, which will be discussed in more details later, for adjusting the angle of the first slit 520 and simultaneously the angle of the cutting plane such that the cutting plane of the first cutting unit (not shown) is within the first slit at all times.

The angle adjustment mechanism is operated by a control unit, e.g. the above mentioned control unit based on the acquired scanning data of a first scanning device (not shown), as discussed in relation to figures 1-4. The scanning data is utilized to control the cutting unit and the first slit 520 by means of increasing or decreasing the angle of the first slit and the cutting plane while cutting a food product by the cutting unit. As an example, figures 5 (a) and 6 (a) show where the starting angle of the first slit when starting cutting the food product (not shown) is approximately 45° in relation to the conveying direction 517 where the angle may be successively increased to 90° and further to 135°, in relation to the conveying direction 517 when cutting a food object such as a fish fillet.

The controlling may be based on cutting the food objects into two or more smaller food products that fulfill a pre-defined target such as weight target, dimensional related target which may include that all the smaller food products have similar width.

Different means may be provided to ensure that during cutting, the angle adjustment mechanism 530 does not become damaged, this may depend on the cutting unit being used. If e.g. a water cutter is used as a cutting unit, any means such as elongate steel beam and the like may be arranged below the first slit 520. If the cutting unit is a cutting blade, it may be sufficient to have a sufficient distance between the infeed conveyor 501 and a conveyor system 502 and the angle adjustment mechanism 530.

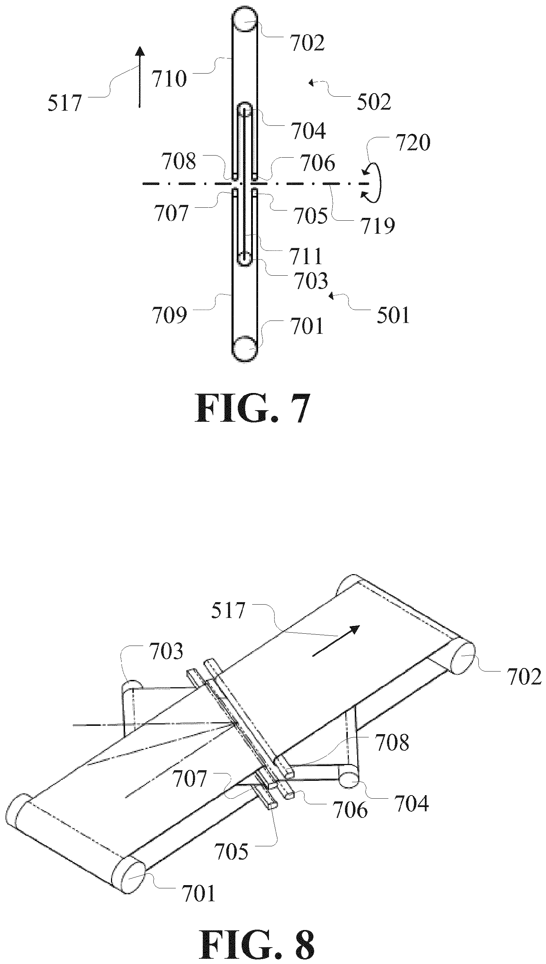

Figure 7 shows a side view of figure 5c and 6c showing where the infeed conveyor 501 and the conveyor system 502 form a 90° angle in relation to the conveying direction 517. The infeed conveyor 501 comprises an endless loop belt 709 extending between four rollers/bars 701, 705, 703, 707, and where the conveyor system 502 (which is a single conveyor) also comprises an endless loop belt 710 extending between four rollers/bars 702, 706, 704, 708. Rollers 701 and 702 may be rotors for driving the respective one of the conveyor belts 709, 710, whereas rollers 703, 704 may act as idle rollers, and where 705, 706, 707, 708 may be bars that are fixed.

The angle adjustment mechanism may comprise means for mounting rollers 703 and 704 internally fixed together via e.g. an elongated rod or rods 711 extending between the rollers 703, 704, and a driving mechanism (not shown) that may be directly or indirectly mounted to the rod(s) (or a frame structure connected to the rod(s)) for allowing a rotational movement, as indicated by the arrow 720, of the rollers 703, 704 around rotational axis 719 in a controllable way based on the above mentioned scanning data.

Bars 705 to708 may also be internally fixed together via e.g. similar rod(s), where bars 705 to708 are also rotatable around rotation axis 719 such that the rotational movement of the rollers 703, 704 is followed by the rotational movement of the bars 705-708, which may be due to the increase in the belt tension of the belts 709, 710 when rotating the rollers 703, 704.

This is illustrated graphically in figure 8, which shows enlarged view of figure 6(d).

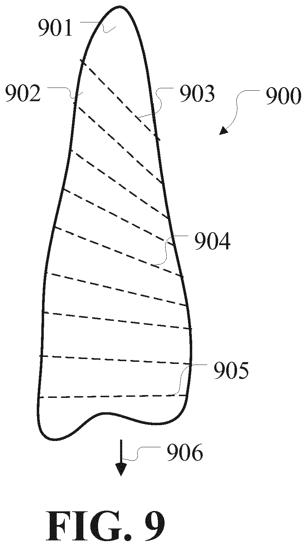

Figure 9 shows an example of a fish fillet that has been cut into a plurality of smaller food products 901, 902, where the cuts 903 to 905 through the food object 900 has different angles in relation to the conveying direction 906, starting in this example at 90° 905 and ending at 45° 903.

Figures 10 and 11 show a perspective view and a side view of an example of an embodiment of a conveyor system that may be used in relation to any of the figures 1-8 comprising a first conveyor 1001 and a second conveyor 1002, where these conveyors are so-called round belt conveyors comprising a plurality of spaced apart and endless loop round belts 1006, 1007, which may e.g. be made of rubber or any type of deformable material. The round belts may be of different length. The first conveyor comprises a roller 1009, which may act as a driving roller, and idle rollers 1003 and 1005, and the second conveyor 1002 comprises a roller 1010, which may act as a driving roller, and idle rollers 1004 and 1008.

The rollers 1003 and 1005, associated with the first conveyor 1001, and the rollers 1004 and 1008 associated with the second conveyor 1002 are shown in more details in figure 12, the idle rollers 1005 and 1008 may be considered as plurality of idle wheels. The rollers 1003 and 1004 comprise plurality of spaced apart grooves 1201 and 1202 circumferentially surrounding the rollers 1003, 1004. The plurality of round belts 1006, 1007 engage with these spaced apart grooves 1201, 1202, and with corresponding grooves 1020, 1021 circumferentially surrounding the driving rollers 1009, 1010, where the distance between adjacent grooves in rollers 1003 and 1004 is substantially the same as the distance between adjacent grooved 1020 and 1021 in the driving rollers. It is thus ensured that the round belts 1006, 1007 are propped in the rollers and do note slide sideways.

This embodiment also shows a cutting unit 1005 comprising a sword type blade 1006, but a scanning device e.g. as discussed previously in relation to figures 1-8 is not shown here.

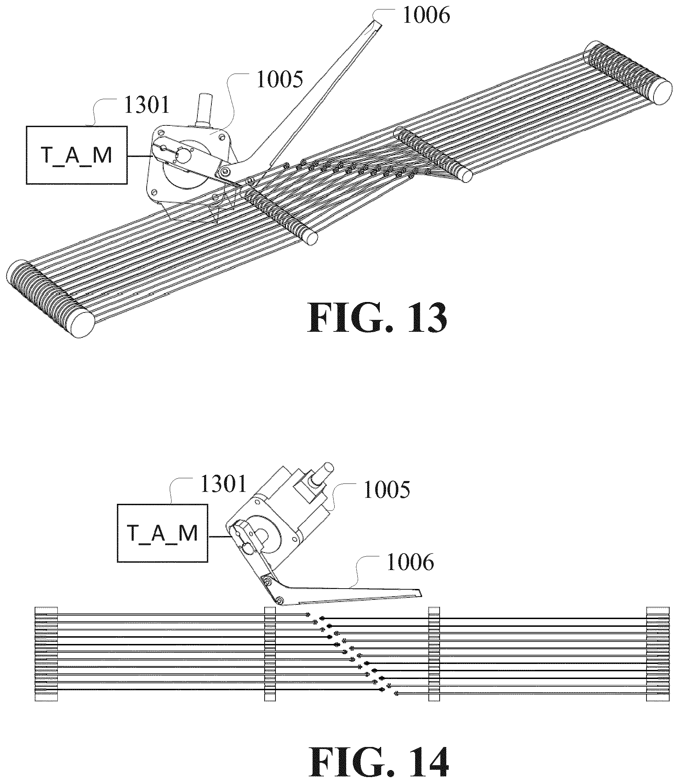

Figures 13 and 14 depict a perspective view and a side view of the conveyor system shown in figures 10 and 11, where the cutting unit are wherein the first and/or the second cutting unit is mounted to a tilting angle mechanism (T_A_M) 1301. It is thus possible to cut the food objects into smaller food products that have more natural shape, e.g. similar as fish fillets or chicken breasts, where the cut sides are not necessarily vertical but may have varying inclinations.

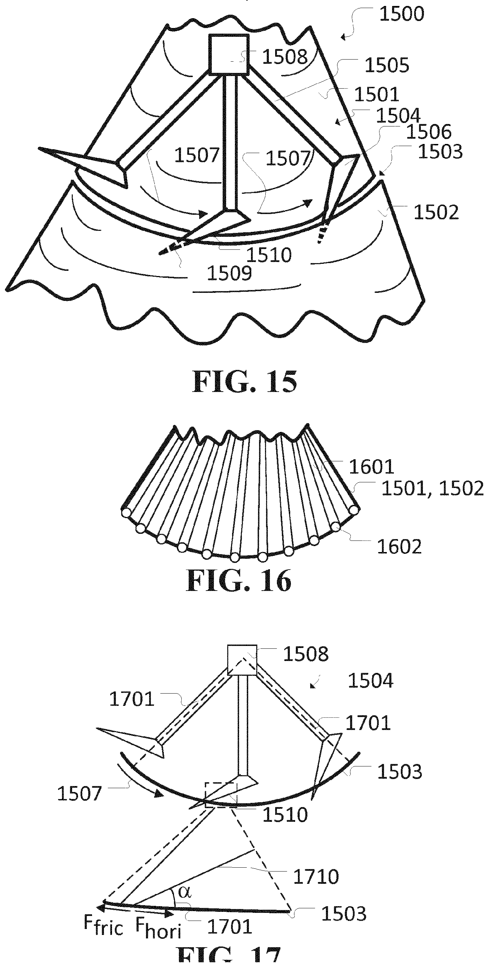

Figure 15 shows one embodiment of a cutting apparatus 1500 according to the present invention adapted to cut food objects into smaller food objects. As shown in this embodiment the cutting unit 1504 is positioned above the first (or the second) slit 1503 defined by adjacent conveyors 1501, 1502 or adjacent carrying surfaces, and driven by a driving unit 1508 , where the cutting unit comprises a knife blade 1506.

The first (and/or the second) slit 1503 has a concave shape that essentially follows the cutting path as indicated by arrow 1507 of the rotatable knife blade 1506 such that a distal end 1509 of the knife blade extends through the slit 1503, e.g. some millimeters below the carrying surface.

The cutting unit 1504 comprises an arm 1505 that is prefereably made of ligth weight material such as, but not limited to, carbon fibers, ceramic material, plastic material, or metal or metal alloy. As shown, the knife blade 1506 is mounted to one end of the arm, where the opposite end of the arm is mounted to the driving unit 1508 that supplies the rotational movement 1507 of the arm and thus the knife blade 1506. As will be discussed in more details later the knife blade 1506 is mounted to the arm such that, while cutting a food object into smaller food objects, a cutting edge side 1510 of the knife blade engages with the food object under an angle such that the knife blade exerts with a downwardly facing force onto the food object and towards the carrying surface of the conveyor system during the cutting.

Figure 16 depicts graphically an embodiment where the conveyors 1501, 1502 or carrying surfaces comprise a plurality of side by side arranged endless cord belts 1601 where as shown here the cord may have a circular cross sectional shapes 1602. It is thus easy to arrange the cord belts such that they follow the shape of the support surface.

Figure 17 shows an embodiment where the concave shape of the carrying surface around the first (and/or the second) slit(s), i.e. the shape of the slit(s) 1503, is an arc having a center being substantially at the rotational axis of the rotatable cutting unit 1504.

Shown is also a zoomed up view of the cutting unit 1504, where the angle 1701 between a cutting edge side 1710 and the carrying surface 1503 (or a tangent at the point of contact of the carrying surface around the opening) is an acute angle during the cutting. In one embodiment, the acute angle is between 10° and 60°, preferably between 20° and 30°, most preferably around 25°.

The angle 1701 is adapted to the type and/or the characteristics of the food object and/or the coefficient of friction of the carrying surface such that during cutting, the horizontal force Fₕₒᵣᵢ exerted by the cutting unit onto the food object does not exceed the frictional force F_{fric} between the food object and the carrying surface.

As an example, in case the food object is boneless chickenleg experiments have shown that a preferred angle is around 25°. Assuming that the maximum thickness h of the boneless chickenlegs is as an example 15mm the length *X* of the cutting edge side 1510 is: *X*=(*hₘₐₓ*)/sin25°=15mm/sin25°=35,5mm.

Accordingly, a very short knife blade is needed to perform the cutting of such boneless chickenlegs, where the primary part of the cutting unit is the arm, which as already addressed can be made of any type of light weight material.

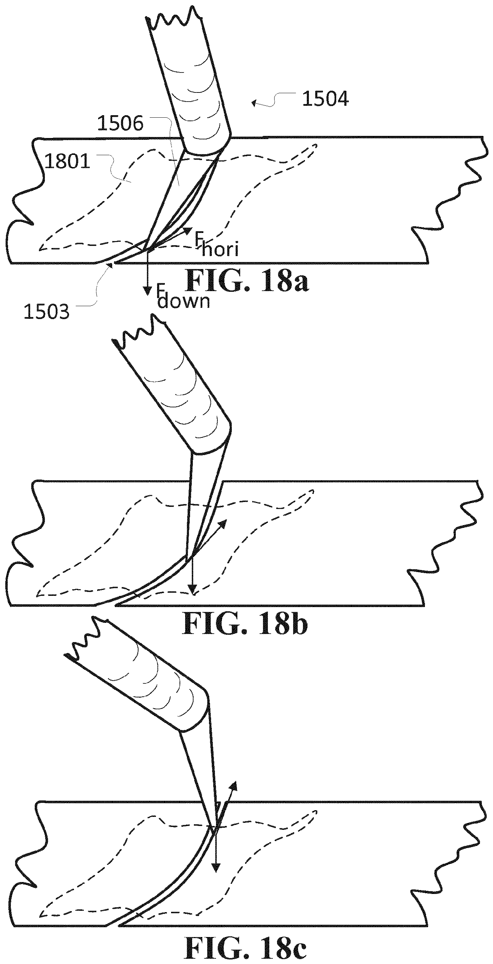

Figure 18a,b,c depicts graphically the movement of the cutting unit 1504 in figure 15 through the slit 1503. As shown here, the knife blade 1506 exerts with a downwardly pointing force F_{down} and a horizontal force Fₕₒᵣᵢ as discussed previously in relation to figure 17 onto the food object 1801, where the angle between the knife blade and the carrying surface discussed previously is such that the friction force pointing opposite to the horizontal force Fₕₒᵣᵢ is equal so as to prevent side-wise sliding of the food object 1801.

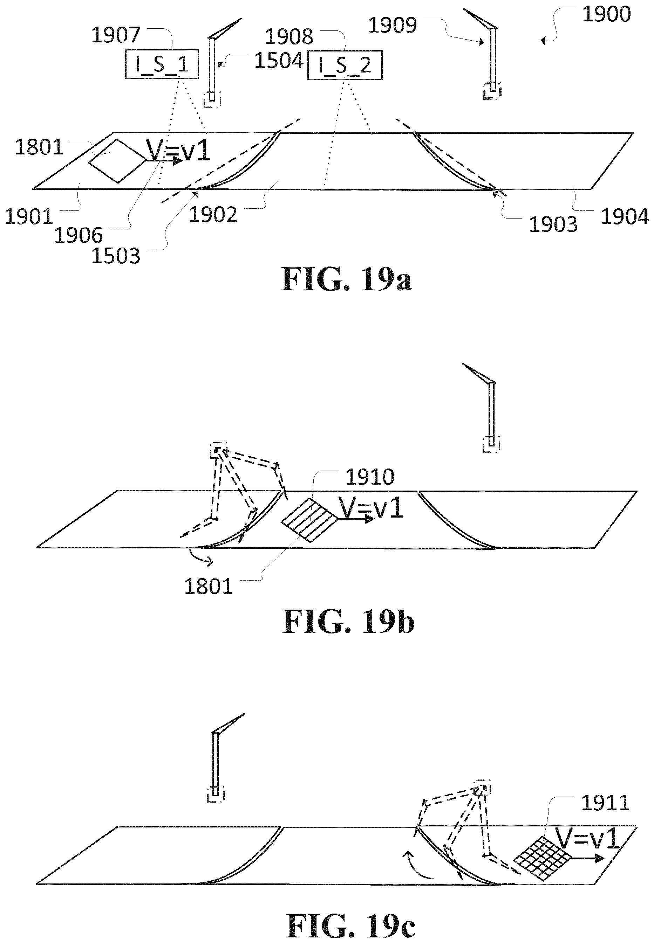

Figure 19a,b,c shows one embodiment of the cutting apparatus shown in figure 15-18 showing a second concave slit 1903 positioned downstream in relation to the first concave slit 1503 or the moving direction of the conveyor system as indicated by arrow 1906.

As shown here the second slit 1903 forms an angle in relation to the first slit 1503, and where the cutting apparatus further comprises a second rotatable cutting unit 1909 arranged above the second slit having a knife plane extending through the second slit 1903. The angle of the second slit is shifted, in relation to the angle of the first slit, between 70° and 110°, preferably around 90°.

In operation, the food object 1801 which may e.g. be a boneless chicken leg is conveyed in a conveying direction 1906 at a conveying speed v1. A first imaging system 1907 is positioned upstream in relation to the first slit 1503 and is adapted to obtain first image data of the food object 1801. A processor receives and processes the first image data to create control parameter for controlling the cutting unit 1504, where the controlling may include when to initiate the cutting and when to stop the cutting, preferably so as to divide the food object 1801 into smaller food objects.

Figure 19b shows where the food object 1801 has been cut into a plurality of smaller food objects, in this case plurality of strips 1910 preferably of equal size, by the first cutting unit 1504. The second conveyor 1902 in this embodiment moves with the same speed as the first conveyor, i.e. V=v1.

Between the first slit 1503 and the second slit 1903 is a second imaging system 1908 for obtaining second image data of the cut food object where the processor processes the second image data for creating control commands for the second cutting unit 1909.

Figure 19c shows where the strips 1910 have undergone a second cutting process by the second cutting unit 1909. If the arrangement of the second slit 1903 is 90° compared to the first slit 1503 the food object is cut into substantially rectangular pieces 1911.

The final food object shown here is accordingly a plurality of substantially rectangular pieces that are placed together as a kind of a single piece.

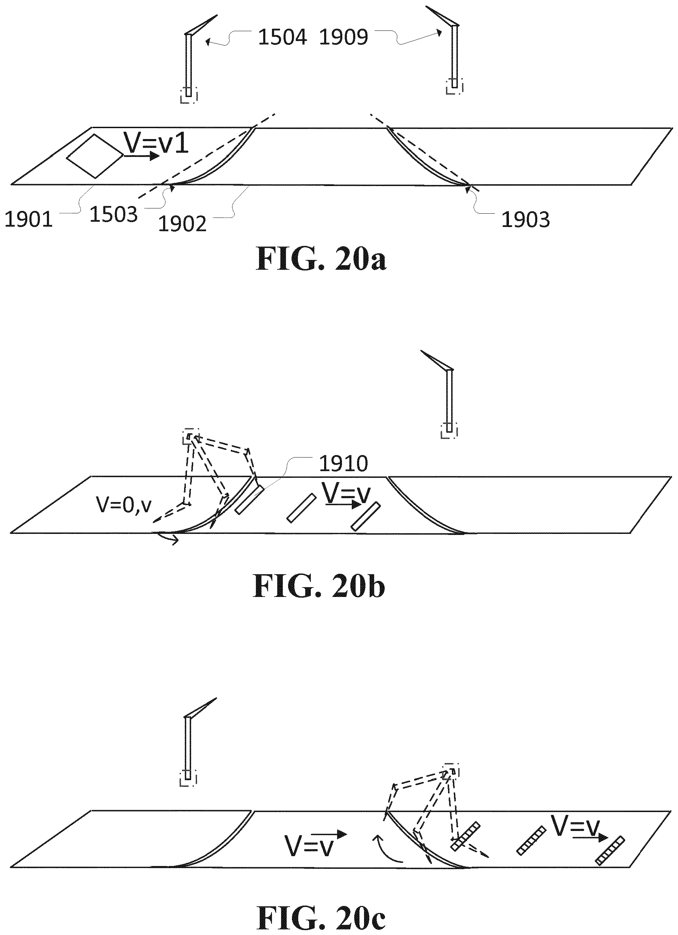

Figure 20a,b,c depicts the cutting apparatus shown in figure 19, but where the apparatus shown here further comprises a spacer or spacer system for separating the smaller food objects after the first cutting process from each other. In this example, the spacer may comprise a speed control unit that controls separately the speed of the first conveyor 1901 and the second conveyor 1902 such that a space is created between the strips 1910 as shown in figure 20b.

As an example, this may be achieved by via starting and stopping the first conveyor during the cut, e.g. after cutting each object, the first conveyor is stopped temporarily, e.g. for a fraction of a second, while the second conveyor 1902 is running.

An additional spacer may also be provided between the first slit 1503 and the second slit 1903 for further increasing the distance between the strips before undergoing the second cutting process by the second cutting unit 1909. An additional conveyor unit (not shown) may as an example be provided that is placed downstream in relation to the previous conveyor unit (e.g. the second conveyor) that runs at higher speed such that the space between the strips is further increased.

## Claims

1. A cutting apparatus (100) for cutting food objects (113) into smaller food products (114, 115), comprising:
• an infeed conveyor (101) having a first end and a second end,
• a conveyor system (102) having a first end and a second end, the conveyor system being arranged such that the first end of the conveyor system is adjacent and essentially parallel to the second end of the infeed conveyor defining a first slit (120) there between, and
• a first cutting unit (105) having a cutting plane extending through the first slit and controlled by a control unit (116) for cutting food objects, conveyed by the infeed conveyor, into smaller food products,
**characterized in that** the first slit (120) and the cutting plane of the cutting unit forms an angle different from 90° in relation to the conveying direction (117), wherein the conveyor system (102) comprises:
• a conveyor sub-system (103) having a first end and a second end, and
• an outfeed conveyor (104) having a first end and a second end, where the first end of the conveyor system is the first end of the conveyor sub-system, and where the second end of the conveyor sub-system is adjacent and essentially parallel to the first end of the outfeed conveyor and defines a second slit (118),
wherein the second slit (118) forms an angle in relation to the first slit (120), and where the cutting apparatus further comprises a second cutting unit (107) controlled by a control unit having a cutting plane extending through the second slit,
wherein the cutting apparatus further comprises a first scanning device (109) associated with the infeed conveyor (101) for acquiring scanning data of incoming food objects (113) on the infeed conveyor, where the acquired scanning data are used as a control data by the control unit (116) for controlling the first cutting unit (105) and by the control unit for controlling the second cutting unit (107).

2. The cutting apparatus according to claim 1, wherein the conveyor sub-system (103) comprises:
• a first conveyor (301) having a first end and a second end, where the first end of the conveyor sub-system is the first end of the first conveyor, and
• a second conveyor (302) having a first end and a second end, the first end of the second conveyor being positioned adjacent and essentially parallel to the second end of the first conveyor defining an intermediate slit (303) where the intermediate slit is essentially parallel to the first slit (120), and where the second end of the conveyor sub-system is the second end of the second conveyor.

3. The cutting apparatus according to any of the preceding claims, wherein the control unit (116) is further adapted to generate a distance between the smaller food products by means of controlling the relative speed between the infeed conveyor (101) and the conveyor system (102).

4. The cutting apparatus according to claim 1, wherein the angle of the second slit is shifted, in relation to the angle of the first slit, between 70° and 110°, preferably around 90°.

5. The cutting apparatus according to claim 2, 3 or 4, wherein the conveying speed of the second conveyor (302) is larger than the speed of the first conveyor (301).

6. The cutting apparatus according to any of the preceding claims, further comprising a second scanning device (111) associated with the conveyor sub-system (103) or the first or the second conveyor for acquiring scanning data of the smaller food products, where the acquired scanning data of the smaller food products are used as a control data by the control unit for controlling the second cutting unit.

7. The cutting apparatus according to any of the preceding claims, further comprising an angle adjustment mechanism (530) for adjusting the angle of the first slit (520) and simultaneously the angle of the cutting plane such that the cutting plane is within the first slit at all times.

8. The cutting apparatus according to claim 7, wherein the angle adjustment mechanism (530) is operated by the control unit based on the acquired scanning data, where the controlling includes increasing or decreasing the angle of the first slit and the cutting plane while cutting a food product by the cutting unit such as between 30° and -30° in relation to the conveying direction.

9. The cutting apparatus according to claim 7 or 8, where the controlling includes successively increasing or decreasing the angle of the first slit (520) and the cutting plane while cutting a food product by the cutting unit such that the resulting smaller food products fulfill a pre-determined target criterion such as a weight criterion.

10. The cutting apparatus according to any of the preceding claims, wherein the first and/or the second cutting unit is mounted to a tilting angle mechanism.

11. A method of cutting food objects into smaller food products using a cutting apparatus (100) according to any of the preceding claims, wherein the cutting apparatus (100)comprises:
• an infeed conveyor having a first end and a second end,
• a conveyor system having a first end and a second end, the conveyor system being arranged such that the first end of the conveyor system is adjacent and essentially parallel to the second end of the infeed conveyor defining a first slit there between, and
• a cutting unit having a cutting plane extending through the first slit and controlled by a control unit,
**characterized in that** the method comprises the step of:
cutting food objects conveyed by the infeed conveyor into smaller food products, wherein the first slit and the cutting plane of the cutting unit forms an angle different from 90° in relation to the conveying direction.

## Patentansprüche

1. Schneidevorrichtung (100) zum Schneiden von Lebensmittelobjekten (113) in kleinere Lebensmittelprodukte (114, 115), umfassend:
• einen Zufuhrförderer (101), der ein erstes Ende und ein zweites Ende aufweist,
• ein Fördersystem (102), das ein erstes Ende und ein zweites Ende aufweist, wobei das Fördersystem angeordnet ist, sodass das erste Ende des Fördersystems benachbart und im Wesentlichen parallel zu dem zweiten Ende des Zufuhrförderers ist und einen ersten Schlitz (120) dazwischen definiert, und
• eine erste Schneideeinheit (105), die eine Schneideebene aufweist, die sich durch den ersten Schlitz erstreckt und durch eine Steuereinheit (116) gesteuert wird, um Lebensmittelobjekte, die durch den Zufuhrförderer gefördert werden, in kleinere Lebensmittelprodukte zu schneiden,
**dadurch gekennzeichnet, dass** der erste Schlitz (120) und die Schneideebene der Schneideeinheit einen von 90 ° verschiedenen Winkel in Bezug auf die Förderrichtung (117) bilden, wobei das Fördersystem (102) Folgendes umfasst:
• ein Förderteilsystem (103), das ein erstes Ende und ein zweites Ende aufweist, und
• einen Ausgangsförderer (104), der ein erstes Ende und ein zweites Ende aufweist, wobei das erste Ende des Fördersystems das erste Ende des Förderteilsystems ist und wobei das zweite Ende des Förderteilsystems benachbart und im Wesentlichen parallel zu dem ersten Ende des Ausgangsförderers ist und einen zweiten Schlitz (118) definiert,
wobei der zweite Schlitz (118) einen Winkel in Bezug auf den ersten Schlitz (120) bildet, und wobei die Schneidevorrichtung ferner eine zweite Schneideeinheit (107) umfasst, die durch eine Steuereinheit gesteuert wird, die eine Schneideebene aufweist, die sich durch den zweiten Schlitz erstreckt,
wobei die Schneidevorrichtung ferner eine erste Abtastvorrichtung (109) umfasst, die dem Zufuhrförderer (101) zugeordnet ist, um Abtastdaten von ankommenden Lebensmittelobjekten (113) auf dem Zufuhrförderer zu erwerben, wobei die erworbenen Abtastdaten als Steuerdaten durch die Steuereinheit (116) zum Steuern der ersten Schneideeinheit (105) und durch die Steuereinheit zum Steuern der zweiten Schneideeinheit (107) verwendet werden.

2. Schneidevorrichtung nach Anspruch 1, wobei das Förderteilsystem (103) Folgendes umfasst:
• einen ersten Förderer (301), der ein erstes Ende und ein zweites Ende aufweist, wobei das erste Ende des Förderteilsystems das erste Ende des ersten Förderers ist, und
• einen zweiten Förderer (302), der ein erstes Ende und ein zweites Ende aufweist, wobei das erste Ende des zweiten Förderers benachbart und im Wesentlichen parallel zu dem zweiten Ende des ersten Förderers positioniert ist und einen Zwischenschlitz (303) definiert, wobei der Zwischenschlitz im Wesentlichen parallel zu dem ersten Schlitz (120) ist, und wobei das zweite Ende des Förderteilsystems das zweite Ende des zweiten Förderers ist.

3. Schneidevorrichtung nach einem der vorhergehenden Ansprüche, wobei die Steuereinheit (116) ferner ausgelegt ist, um einen Abstand zwischen den kleineren Lebensmittelprodukten zu erzeugen, indem die relative Geschwindigkeit zwischen dem Zufuhrförderer (101) und dem Fördersystem (102) gesteuert wird.

4. Schneidevorrichtung nach Anspruch 1, wobei der Winkel des zweiten Schlitzes in Bezug auf den Winkel des ersten Schlitzes zwischen 70 ° und 110°, bevorzugt etwa 90 ° verschoben ist.

5. Schneidevorrichtung nach Anspruch 2, 3 oder 4, wobei die Fördergeschwindigkeit des zweiten Förderers (302) größer als die Geschwindigkeit des ersten Förderers (301) ist.

6. Schneidevorrichtung nach einem der vorhergehenden Ansprüche, ferner umfassend eine zweite Abtastvorrichtung (111), die dem Förderteilsystem (103) oder dem ersten oder dem zweiten Förderer zugeordnet ist, um Abtastdaten der kleineren Lebensmittelprodukte zu erwerben, wobei die erworbenen Abtastdaten der kleineren Lebensmittelprodukte als Steuerdaten durch die Steuereinheit zum Steuern der zweiten Schneideeinheit verwendet werden.

7. Schneidevorrichtung nach einem der vorhergehenden Ansprüche, ferner umfassend einen Winkeleinstellmechanismus (530) zum Einstellen des Winkels des ersten Schlitzes (520) und gleichzeitig des Winkels der Schneideebene, sodass die Schneideebene jederzeit innerhalb des ersten Schlitzes ist.

8. Schneidevorrichtung nach Anspruch 7, wobei der Winkeleinstellmechanismus (530) durch die Steuereinheit basierend auf den erworbenen Abtastdaten betrieben wird, wobei das Steuern das Erhöhen oder Verringern des Winkels des ersten Schlitzes und der Schneideebene beinhaltet, während ein Lebensmittelprodukt durch die Schneideeinheit geschnitten wird, wie zum Beispiel zwischen 30 ° und -30 ° in Bezug auf die Förderrichtung.

9. Schneidevorrichtung nach Anspruch 7 oder 8, wobei das Steuern das sukzessive Erhöhen oder Verringern des Winkels des ersten Schlitzes (520) und der Schneideebene beinhaltet, während ein Lebensmittelprodukt durch die Schneideeinheit geschnitten wird, sodass die resultierenden kleineren Lebensmittelprodukte ein vorbestimmtes Zielkriterium erfüllen, wie zum Beispiel ein Gewichtskriterium.

10. Schneidevorrichtung nach einem der vorhergehenden Ansprüche, wobei die erste und/oder die zweite Schneideeinheit an einem Kippwinkelmechanismus montiert ist.

11. Verfahren zum Schneiden von Lebensmittelobjekten in kleinere Lebensmittelprodukte unter Verwendung einer Schneidevorrichtung (100) nach einem der vorhergehenden Ansprüche, wobei die Schneidevorrichtung (100) Folgendes umfasst:
• einen Zufuhrförderer, der ein erstes Ende und ein zweites Ende aufweist,
• ein Fördersystem, das ein erstes Ende und ein zweites Ende aufweist, wobei das Fördersystem angeordnet ist, sodass das erste Ende des Fördersystems benachbart und im Wesentlichen parallel zu dem zweiten Ende des Zufuhrförderers ist und einen ersten Schlitz dazwischen definiert, und
• eine Schneideeinheit, die eine Schneideebene aufweist, die sich durch den ersten Schlitz erstreckt und durch eine Steuereinheit gesteuert wird,
**dadurch gekennzeichnet, dass** das Verfahren den folgenden Schritt umfasst:
Schneiden von Lebensmittelobjekten, die durch den Zufuhrförderer gefördert werden, in kleinere Lebensmittelprodukte, wobei der erste Schlitz und die Schneideebene der Schneideeinheit einen von 90 ° verschiedenen Winkel in Bezug auf die Förderrichtung bilden.

## Revendications

1. Appareil de découpe (100) pour découper des objets alimentaires (113) en produits alimentaires plus petits (114, 115), comprenant :
• un convoyeur d'entrée (101) ayant une première extrémité et une seconde extrémité,
• un système de convoyeur (102) ayant une première extrémité et une seconde extrémité, le système de convoyeur étant agencé de sorte que la première extrémité du système de convoyeur soit adjacente et essentiellement parallèle à la seconde extrémité du convoyeur d'entrée définissant une première fente (120) entre celles-ci, et
• une première unité de découpe (105) ayant un plan de coupe s'étendant à travers la première fente et commandée par une unité de commande (116) pour découper des objets alimentaires, convoyés par le convoyeur d'entrée, en produits alimentaires plus petits,
**caractérisé en ce que** la première fente (120) et le plan de coupe de l'unité de découpe forment un angle différent de 90° par rapport au sens de convoyage (117), dans lequel le système de convoyeur (102) comprend :
• un sous-système de convoyeur (103) ayant une première extrémité et une seconde extrémité, et
• un convoyeur de sortie (104) ayant une première extrémité et une seconde extrémité, dans lequel la première extrémité du système de convoyeur est la première extrémité du sous-système de convoyeur, et dans lequel la seconde extrémité du sous-système de convoyeur est adjacente et essentiellement parallèle à la première extrémité du convoyeur de sortie et définit une seconde fente (118),
dans lequel la seconde fente (118) forme un angle par rapport à la première fente (120), et dans lequel l'appareil de découpe comprend en outre une seconde unité de découpe (107) commandée par une unité de commande ayant un plan de coupe s'étendant à travers la seconde fente,
dans lequel l'appareil de découpe comprend en outre un premier dispositif de balayage (109) associé au convoyeur d'entrée (101) pour acquérir des données de balayage des objets alimentaires entrants (113) sur le convoyeur d'entrée, dans lequel les données de balayage acquises sont utilisées comme données de commande par l'unité de commande (116) pour commander la première unité de découpe (105) et par l'unité de commande pour commander la seconde unité de découpe (107).

2. Appareil de découpe selon la revendication 1, dans lequel le sous-système de convoyeur (103) comprend :
• un premier convoyeur (301) ayant une première extrémité et une seconde extrémité, dans lequel la première extrémité du sous-système de convoyeur est la première extrémité du premier convoyeur, et
• un second convoyeur (302) ayant une première extrémité et une seconde extrémité, la première extrémité du second convoyeur étant positionnée adjacente et essentiellement parallèle à la seconde extrémité du premier convoyeur définissant une fente intermédiaire (303) dans lequel la fente intermédiaire est essentiellement parallèle à la première fente (120), et dans lequel la seconde extrémité du sous-système de convoyeur est la seconde extrémité du second convoyeur.

3. Appareil de découpe selon l'une quelconque des revendications précédentes, dans lequel l'unité de commande (116) est en outre adaptée pour générer une distance entre les produits alimentaires plus petits au moyen de la commande de la vitesse relative entre le convoyeur d'entrée (101) et le système de convoyeur (102).

4. Appareil de découpe selon la revendication 1, dans lequel l'angle de la seconde fente est décalé, par rapport à l'angle de la première fente, entre 70° et 110°, de préférence environ 90°.

5. Appareil de découpe selon la revendication 2, 3 ou 4, dans lequel la vitesse de convoyage du second convoyeur (302) est supérieure à la vitesse du premier convoyeur (301).

6. Appareil de découpe selon l'une quelconque des revendications précédentes, comprenant en outre un second dispositif de balayage (111) associé au sous-système de convoyeur (103) ou au premier ou au second convoyeur pour acquérir des données de balayage des produits alimentaires plus petits, dans lequel les données de balayage acquises des produits alimentaires plus petits sont utilisées comme données de commande par l'unité de commande pour commander la seconde unité de découpe.

7. Appareil de découpe selon l'une quelconque des revendications précédentes, comprenant en outre un mécanisme de réglage d'angle (530) pour régler l'angle de la première fente (520) et simultanément l'angle du plan de coupe de telle sorte que le plan de coupe se trouve à l'intérieur de la première fente à tout moment.

8. Appareil de découpe selon la revendication 7, dans lequel le mécanisme de réglage d'angle (530) est actionné par l'unité de commande sur la base des données de balayage acquises, dans lequel la commande comprend l'augmentation ou la diminution de l'angle de la première fente et du plan de coupe pendant la découpe d'un produit alimentaire par l'unité de découpe, tel qu'entre 30° et -30° par rapport au sens de convoyage.

9. Appareil de découpe selon la revendication 7 ou 8, dans lequel la commande comprend successivement l'augmentation ou la diminution de l'angle de la première fente (520) et du plan de coupe pendant la découpe d'un produit alimentaire par l'unité de découpe de telle sorte que les produits alimentaires plus petits résultants remplissent un critère cible pré -déterminé tel qu'un critère de poids.

10. Appareil de découpe selon l'une quelconque des revendications précédentes, dans lequel la première et/ou la seconde unité de découpe est assemblée à un mécanisme d'angle d'inclinaison.

11. Procédé de découpe d'objets alimentaires en produits alimentaires plus petits en utilisant un appareil de découpe (100) selon l'une quelconque des revendications précédentes, dans lequel l'appareil de découpe (100) comprend :
• un convoyeur d'entrée ayant une première extrémité et une seconde extrémité,
• un système de convoyeur ayant une première extrémité et une seconde extrémité, le système de convoyeur étant agencé de telle sorte que la première extrémité du système de convoyeur soit adjacente et essentiellement parallèle à la seconde extrémité du convoyeur d'entrée définissant une première fente entre celles-ci, et
• une unité de découpe ayant un plan de coupe s'étendant à travers la première fente et commandée par une unité de commande,
**caractérisé en ce que** le procédé comprend en outre :
la découpe des objets alimentaires convoyés par le convoyeur d'entrée en produits alimentaires plus petits, dans lequel la première fente et le plan de coupe de l'unité de découpe forment un angle différent de 90° par rapport au sens de convoyage.
